# EUROPEAN PATENT APPLICATION

(11) **EP 3 477 028 A1**
(43) Date of publication of application: **01.05.2019**
(21) Application number: 17198006.3
(22) Date of filing: 24.10.2017
(51) Int. Cl.: E05B 65/52

(54) **PROTECTING ARRANGEMENT, SYSTEM AND METHOD**

(71) Applicant: Assa Abloy AB, 107 23 Stockholm (SE)
(72) Inventor: STENLUND, Peter, 116 22 STOCKHOLM (SE)
(74) Representative: Kransell & Wennborg KB

(57) **Abstract**

Protecting arrangement (10) for protecting a device (72) from unauthorized tampering, the protecting arrangement (10) comprising a first part (12) and a second part (14) jointly configured to form a cover (16) for enclosing the device (72) to be protected from unauthorized tampering; at least one fastening element (30) for fastening the first part (12) to the second part (14); an actuator (38) movable from a blocking position to an unblocking position based on an authorization signal; wherein the at least one fastening element (30) is prevented from being released when the actuator (38) adopts the blocking position and wherein the at least one fastening element (30) is allowed to be released when the actuator (38) adopts the unblocking position. A system (92) comprising a protecting arrangement (10) and an access device (94) and a method for preventing unauthorized access to a device (72), are also provided.

## Description

### TECHNICAL FIELD

The present disclosure generally relates to protection of devices from unauthorized tampering. In particular, a protecting arrangement for protecting a device from unauthorized tampering, a system comprising a protecting arrangement and an access device, and a method for preventing unauthorized access to a device, are provided.

### BACKGROUND

Unauthorized tampering of devices is a problem within many different technical fields. The purpose of the tampering may vary. For example, tailgates for trucks have a loading platform which can be lifted and lowered and pivoted by a lifting mechanism. The lifting mechanism has hydraulic cylinders for lifting and lowering and pivoting the loading platform. The tailgate is kept up using hydraulic pressure. A frequent problem is that thieves tamper with the hydraulic cylinders of the tailgate and steal goods from the truck. This may for example be done by disconnecting the hydraulic lines such that the hydraulic pressure is lowered and the tailgate is lowered.

US 5873297 A discloses a fluid-operated brake actuator having a check valve in the spring chamber to equalize the pressure on opposite sides of an operating movable diaphragm. The check valve being double redundant and comprising a tubular body having a first one-way valve disposed and one end of the tubular body and a second one-way valve disposed at an opposite end of the tubular body. A support plate is mounted to the tubular body to support the second valve and prevents the easy removal of the check valve from the brake actuator.

### SUMMARY

One object of the present disclosure is to provide a protecting arrangement that efficiently opposes unauthorized tampering or manipulation of a device.

A more particular object of the present disclosure is to provide a protecting arrangement that efficiently opposes unauthorized tampering of a fluid-actuated device, such as a fluid-actuated cylinder.

A further object of the present disclosure is to provide a protecting arrangement that efficiently opposes machining, such as sawing.

A still further object of the present disclosure is to provide a protecting arrangement that has a simple and/or cheap design.

A still further object of the present disclosure is to provide a protecting arrangement that has a reliable operation, such as in dirty environments.

A still further object of the present disclosure is to provide a system comprising a protecting arrangement and an access device, solving one or more of the foregoing objects.

A still further object of the present disclosure is to provide a method for preventing unauthorized access to a device solving one or more of the foregoing objects.

According to one aspect, there is provided a protecting arrangement for protecting a device from unauthorized tampering, the protecting arrangement comprising a first part and a second part jointly configured to form a cover for enclosing the device to be protected from unauthorized tampering; at least one fastening element for fastening the first part to the second part; and an actuator movable from a blocking position to an unblocking position based on an authorization signal; wherein the at least one fastening element is prevented from being released when the actuator adopts the blocking position and wherein the at least one fastening element is allowed to be released when the actuator adopts the unblocking position.

The actuator may directly block the at least one fastening element in the blocking position in order to prevent the at least one fastening element from being released, i.e. the actuator may contact the at least one fastening element. Alternatively, the actuator may indirectly block the at least one fastening element in the blocking position in order to prevent the at least one fastening element from being released, i.e. one or several intermediate components may be arranged between the actuator and the at least one fastening element.

A large amount of types of devices may be protected from unauthorized tampering or manipulation by the protecting arrangement according to the present disclosure. According to one example, the device to be protected is a fluid-actuated device, such as a fluid-actuated cylinder, such as a hydraulic cylinder or pneumatic cylinder. The device to be protected may also be comprised by a wide range of implementations, including but not limited to, vehicles (e.g. breaking systems), trucks (e.g. tailgates), wheel loaders, pallet forks, industries, ports, penstocks, and ships (e.g. visors). The protecting arrangement according to the present disclosure may be used in any implementation comprising a fluid-actuated cylinder.

In case the device to be protected is constituted by a fluid-actuated device, the cover may enclose the device, enclose the device and all of its fluid connections, or may enclose only one or more fluid connections to the device. In case the device to be protected is constituted by a fluid-actuated cylinder, the cover may substantially conform to the size of the cylinder barrel. Hoses and valves of the fluid-actuated cylinder may also be enclosed by the cover.

Various types of actuators may be employed for the protecting arrangement according to the present disclosure. The actuator may be constituted by an electromechanical actuator configured to move from the blocking position to the unblocking position based on an authorization signal. The actuator may be configured to receive the authorization signal via signal lines or wirelessly, for example by means of BLE (Bluetooth Low Energy) or NFC (Near Field Communication). The actuator may be powered by an access device, e.g. a key, such that the actuator can operate offline.

The actuator may for example be constituted by an Internet of Things (IoT) device connected to a local area network. According to a further example, the actuator may be constituted by a CLIQ ® cylinder or similar cylinder accessible by an access device, such as a work shop key. A deactivated key (e.g. a CLIQ ® key) may be kept near the protecting arrangement. The key may for example be kept in a vehicle when the device to be protected is a device on the vehicle. If repair of the device is needed remote from the regular workshop, e.g. for a sudden repair, the driver contacts the central office which delegates access to the key. The actuator may also be movable from the unblocking position to the blocking position, i.e. the actuator may be movable between the blocking position and the unblocking position.

The protecting arrangement according to the present disclosure may comprise more than one fastening element, such as two or four fastening elements. Each of the at least one fastening element may for example be constituted by a screw. By tightening the screws, the cover may be tightly wrapped around the device to be protected. A clearance may however be provided within the cover to accommodate the accessory components of the device.

When each of the at least one fastening element has been released, the cover may be opened to access the device. The first part and the second part may for example be separable or hinged, e.g. hinged about a hinge axis substantially parallel with a longitudinal axis of the cover. The hinge axis may for example be constituted by one or more hooks in the first part and one or more loops associated with the hooks in the second part, or vice versa. Throughout the present disclosure, the protecting arrangement may alternatively be referred to as a protecting structure.

The protecting arrangement may further comprise a blocking bar for blocking the at least one fastening element in a blocking position of the blocking bar and for unblocking the at least one fastening element in an unblocking position of the blocking bar, wherein the blocking bar is prevented from being moved from the blocking position when the actuator adopts the blocking position.

Alternatively, the protecting arrangement may further comprise a blocking bar arranged in a bore of the second part, wherein the blocking bar is movable from a blocking position in the bore, in which the blocking bar blocks the at least one fastening element such that the at least one fastening element is prevented from being released, to an unblocking position, in which the blocking bar does not block the at least one fastening element such that the at least one fastening element is allowed to be released, when the actuator adopts the unblocking position. The bore may be substantially parallel to a longitudinal axis of the cover.

The protecting arrangement according to the present disclosure may comprise more than one blocking bar, such as two blocking bars. Furthermore, the protecting arrangement may for example comprise one, two or more fastening elements associated with each blocking bar.

The blocking bar may also be movable from the unblocking position to the blocking position, i.e. the blocking bar may be movable between the blocking position and the unblocking position. A blocking bar according to the present disclosure constitutes one example of an intermediate component arranged between the actuator and the at least one fastening element.

The blocking bar may be manually movable from the blocking position to the unblocking position when the actuator adopts the unblocking position. The blocking bar may for example be moved by hand. Alternatively, the blocking bar may be automatically movable from the blocking position to the unblocking position, for example by means of a blocking bar actuator, such as a gear drive. This may be suitable for industrial applications. For protecting arrangements for larger devices, such as fluid-actuated cylinders for penstocks, the blocking bar may have a diameter of several decimeters. A blocking bar sensor, such as an encoder or a Hall effect sensor, may be associated with each blocking bar to determine the position of the blocking bar.

The at least one fastening element may comprise a fastening element recess and the blocking bar may block the at least one fastening element by engaging the fastening element recess in the blocking position of the blocking bar. In case the at least one fastening element is constituted by a screw, the fastening element recess may be constituted by a section of reduced diameter of the screw, e.g. a waist.

The protecting arrangement may further comprise a blocking plate having an aperture structure, wherein the blocking plate is rotatable from a blocking position, in which the blocking plate blocks the blocking bar by engaging the blocking bar with the aperture structure, to an unblocking position, in which the blocking bar is allowed to move to the unblocking position of the blocking bar, when the actuator adopts the unblocking position. The blocking plate may also be rotatable from the unblocking position to the blocking position, i.e. the blocking plate may be rotatable between the blocking position and the unblocking position.

The blocking plate may be rotatable from the blocking position to the unblocking position about the longitudinal axis of the cover, about an axis substantially parallel to the longitudinal axis of the cover, or about an axis parallel to the longitudinal axis of the cover. A blocking plate according to the present disclosure constitutes one example of an intermediate component arranged between the actuator and the at least one fastening element.

The blocking plate may be accommodated in the first part or the second part, or accommodated in both the first part and the second part, for example in a groove. The blocking plate may have a flat appearance, e.g. the blocking plate may be thin in a direction parallel with the longitudinal axis of the cover. The blocking plate may be constituted by a disc. According to one example, the blocking plate is constituted by a disc having an angular extension about the longitudinal axis of the cover of less than 180 degrees. In this case, the blocking plate may for example be entirely accommodated in the second part.

The blocking bar may comprise at least one blocking bar recess, such as a waist, and the blocking plate may block the blocking bar by engaging the at least one blocking bar recess with the aperture structure in the blocking position of the blocking plate. The blocking bar may have a substantially uniform circumference except for the at least one blocking bar recess. The blocking bar may have a circular cross-section.

The actuator may comprise an actuator pin and the blocking plate may comprise a blocking plate opening for receiving the actuator pin in the blocking position of the blocking plate. The actuator pin may be movable substantially parallel with the longitudinal axis of the cover in order to adopt the blocking position and the unblocking position of the actuator. When the actuator adopts the blocking position and the actuator pin protrudes into or through the blocking plate opening, the blocking plate is prevented from rotating. When the actuator adopts the unblocking position and the actuator pin is retracted out from the blocking plate opening, the blocking plate is able to rotate from the blocking position to the unblocking position of the blocking plate.

Thus, according to one specific example, the cover may be opened by sending an authorization signal to the actuator, moving the actuator from the blocking position to the unblocking position (e.g. retracting the actuator pin out from the blocking plate opening), rotating the blocking plate from the blocking position to the unblocking position, moving the blocking bar from the blocking position to the unblocking position and releasing the at least one fastening element.

The blocking plate may be manually rotatable from the blocking position to the unblocking position when the actuator adopts the unblocking position, e.g. by hand. For this purpose, the protecting arrangement may further comprise a manoeuvring member for manually manoeuvring the blocking plate from from the blocking position to the unblocking position, and vice versa. The manoeuvring member may for example be constituted by a handle or pin protruding radially out from the cover. The manoeuvring member may be guided in a slot, for example provided in the second part.

Alternatively, the blocking plate may be automatically movable from the blocking position to the unblocking position, for example by means of a blocking plate actuator. This may be suitable for industrial applications. According to one example, driven gear teeth are arranged on the blocking plate and a motor, such as an electric motor, is arranged to rotate a gear wheel having drive teeth meshing with the driven gear teeth. Thus, by rotating the motor, the blocking plate can be rotated. A blocking plate sensor, such as an encoder or a Hall effect sensor, may be associated with the blocking plate to determine the position of the blocking plate.

The range of rotation of the blocking plate may be limited, for example such that the blocking position and unblocking position of the blocking plate constitute end positions of the rotational range of the blocking plate. In case a manoeuvring member is employed, the end positions of the manoeuvring member in the slot may correspond to the blocking position and the unblocking position, respectively, of the blocking plate. Alternatively, the range of rotation of the blocking plate may be unlimited when the actuator adopts the unblocking position.

According to one example, the blocking plate is structurally dimensioned relatively weak and the actuator pin is structurally dimensioned relatively strong. In this case, if the blocking plate is forced to rotate from the blocking position to the unblocking position, for example by forcibly pushing the manoeuvring member, the blocking plate brakes.

Each of the first part and the second part may be constituted by a cylinder half. Alternatively, or in addition, the first part and the second part may be jointly configured to form a protective sleeve or cuff for enclosing the device to be protected from unauthorized tampering. One or more openings for guiding a fluid line to the device may be arranged in the first part and/or the second part.

The first part and/or the second part may be made of various types of material that provide high resistance against machining. The first part and/or the second part may for example be made of metal, a composite material such as a carbon/glass composite material or a carbon/aramid composite material.

The device may be constituted by a fluid-actuated device, such as a fluid-actuated cylinder, such as a hydraulic cylinder or pneumatic cylinder.

At least one opening may be arranged in the first part and/or the second part. In this case, a fluid line may be guided through each of the at least one opening to the fluid-actuated device.

The protecting arrangement may further comprise an accelerometer configured to detect vibrations in the cover. The accelerometer may be constituted by a three-axis accelerometer. The accelerometer may be in signal communication with a central control unit, e.g. a vehicle control unit or a remote control unit. The signal communication may be wireless. If unexpected vibrations are detected in the protecting arrangement by means of the accelerometer, an alarm system may be activated, e.g. an alarm message to a remote control center or similar may be sent for further action.

According to a further aspect, there is provided a system comprising a protecting arrangement according to the present disclosure and an access device configured to send the authorization signal to the actuator upon verifying that an operator is authorized to access the device. The access device may be constituted by a key. The system may comprise more than one protecting arrangement.

According to a further aspect, there is provided a method for preventing unauthorized access to a device, the method comprising enclosing the device with a cover formed by a first part and a second part; fastening the first part to the second part by means of at least one fastening element; providing an actuator movable from a blocking position to an unblocking position based on an authorization signal, wherein the at least one fastening element is prevented from being released when the actuator adopts the blocking position and wherein the at least one fastening element is allowed to be released when the actuator adopts the unblocking position; determining whether an operator is authorized to access the device; and sending the authorization signal to the actuator upon verifying that the operator is authorized to access the device.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
- Fig. 1:: schematically represents a front view of a protecting arrangement;
- Fig. 2:: schematically represents a side view of the protecting arrangement;
- Fig. 3a:: schematically represents a side view of an actuator in a blocking position;
- Fig. 3b:: schematically represents a side view of the actuator in an unblocking position;
- Fig. 4:: schematically represents a side view of a fastening element;
- Fig. 5:: schematically represents a front view of a blocking plate;
- Fig. 6:: schematically represents a side view of a blocking bar;
- Fig. 7:: schematically represents a front view of the protecting arrangement and further illustrating some interior components;
- Fig. 8:: schematically represents a side view of the protecting arrangement and further illustrating some interior components;
- Fig. 9:: schematically represents a cross-sectional view of section A-A in Figs. 7 and 8;
- Fig. 10:: schematically represents the cross-sectional view of Fig. 9, but where the blocking bars and the blocking plate have adopted their unblocking positions;
- Fig. 11:: schematically represents a side view of a device to be protected from unauthorized tampering; and
- Fig. 12:: schematically represents a side view of a system comprising the protecting arrangement and an access device.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein. Rather, these embodiments are provided by way of example so that this disclosure will be thorough and complete, and will fully convey the scope of the invention to those skilled in the art. Like numbers refer to like elements throughout the description.

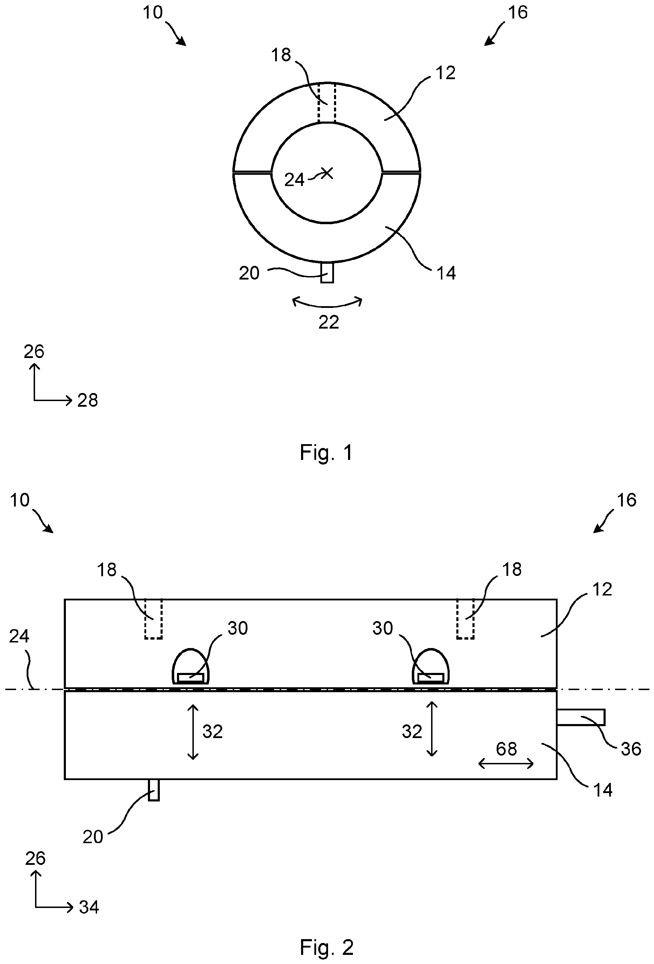

Fig. 1 schematically represents a front view of a protecting arrangement 10. The protecting arrangement 10 comprises a first part 12 and a second part 14. In the illustrated state in Fig. 1, the first part 12 and the second part 14 are mated to jointly form a cover 16. In the example of Fig. 1, each of the first part 12 and the second part 14 is constituted by a cylinder half such that the cover 16 has the shape of a sleeve. However, the cover 16 may adopt alternative shapes.

The cover 16 can be opened and closed around a device (not shown) to be protected from unauthorized tampering. At least one fastening element (not shown) is used for fastening the first part 12 to the second part 14.

The protecting arrangement 10 further comprises two openings 18 (only one can be seen in Fig. 1) for guiding one or more fluid lines, electric lines or similar into the device within the cover 16. Each opening 18 is here implemented as a through bore through the first part 12. Each opening 18 is substantially vertically oriented in Fig. 1.

The protecting arrangement 10 of this example further comprises an optional manoeuvring member 20. The manoeuvring member 20 protrudes radially outwards through a groove (not shown) in the second part 14 and can be used to manually move a blocking plate (not shown) in a rotational direction 22. Fig. 1 further indicates a longitudinal axis 24 of the cover 16, a vertical direction 26 and a first horizontal direction 28.

Fig. 2 schematically represents a side view of the protecting arrangement 10. In Fig. 2, two of four fastening elements 30 can be seen. The protecting arrangement 10 may however comprise an alternative number of fastening elements 30. Each fastening element 30 can be fastened and released along a movement direction 32. Fig. 2 further indicates a second horizontal direction 34, perpendicular to the first horizontal direction 28.

The protecting arrangement 10 further comprises two blocking bars 36 (only one is shown in Fig. 2). Each blocking bar 36 of this example is arranged in a bore (not shown) of the second part 14 and protrudes out from the second part 14 in the second horizontal direction 34. The protecting arrangement 10 may however comprise an alternative number of blocking bars 36 and/or an alternative arrangement of the blocking bars 36 (e.g. not necessarily in the second part 14 and not necessarily protruding out from the cover 16).

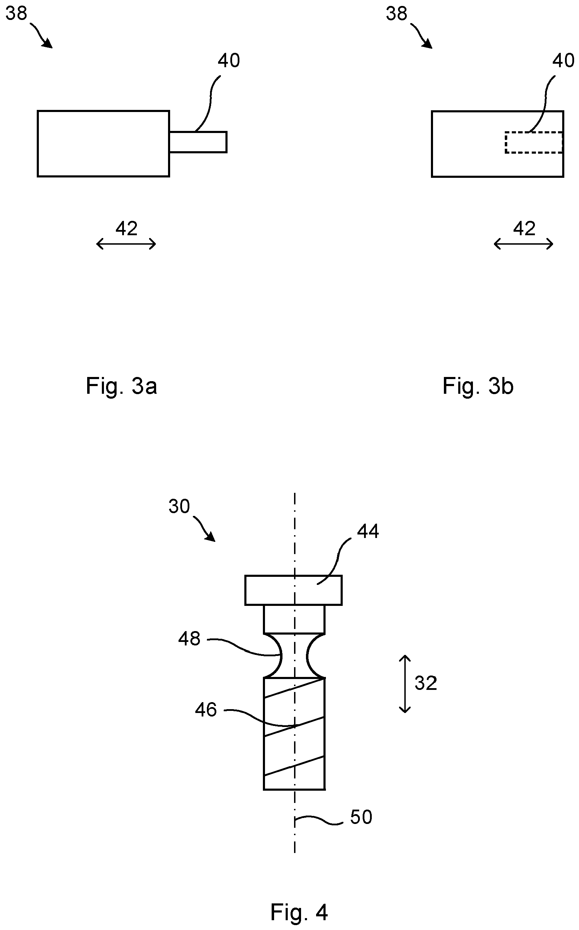

Figs. 3a and 3b schematically represents side views of one example of an actuator 38 according to the present disclosure. Fig. 3a illustrates the actuator 38 in a blocking position and Fig. 3b illustrates the actuator 38 in an unblocking position. The actuator 38 of this example comprises an actuator pin 40 movable in a movement direction 42. When the actuator pin 40 is extended (Fig. 3a), the actuator 38 adopts the blocking position. When the actuator pin 40 is retracted (Fig. 3b), the actuator 38 adopts the unblocking position.

The actuator 38 is configured to move from the blocking position to an unblocking position based on an authorization signal. The actuator 38 of this example is constituted by an electromechanical actuator configured to receive the authorization signal wirelessly, for example by means of BLE (Bluetooth Low Energy) or NFC (Near Field Communication).

Fig. 4 schematically represents a side view of one example of a fastening element 30 according to the present disclosure. The fastening element 30 of this example is constituted by a screw comprising a head 44, a thread 46 and a fastening element recess 48 arranged between the head 44 and the thread 46. The fastening element recess 48 is a section of reduced diameter, such as a waist, and is here implemented as curved section. The curve has a circular shape with a center axis perpendicular to a longitudinal axis 50 of the fastening element 30.

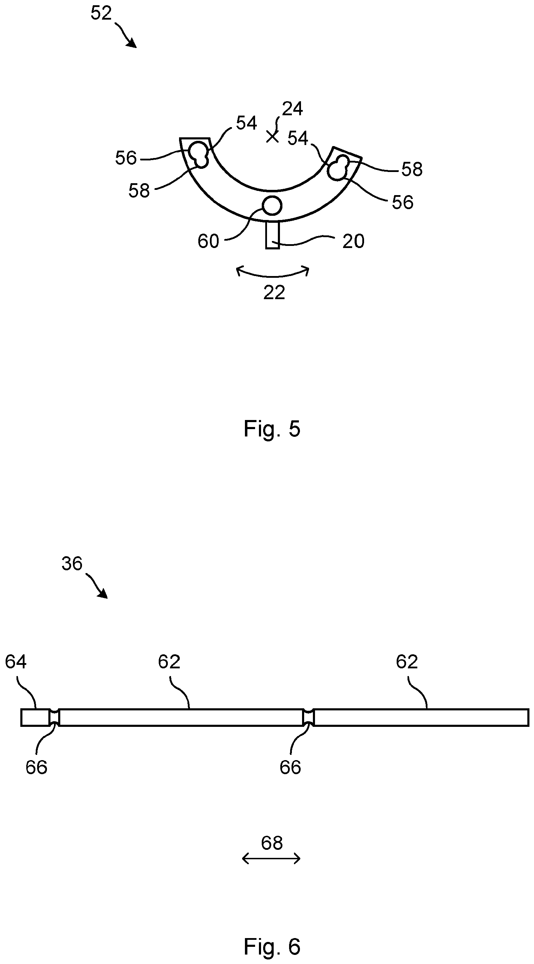

Fig. 5 schematically represents a front view of one example of a blocking plate 52 according to the present disclosure. The blocking plate 52 of this example is constituted by a thin plate, e.g. of metal, and has an angular extension about the longitudinal axis 24 of less than 180 degrees, such as approximately 160 degrees. The blocking plate 52 is rotatable in the rotational direction 22 from a blocking position to an unblocking position. The blocking position and the unblocking position of the blocking plate 52 may for example be defined by end positions of the manoeuvring member 20 in the groove in the second part 14.

The blocking plate 52 of the example in Fig. 5 further comprises two aperture structures 54. The blocking plate 52 may however comprise an alternative number of aperture structures 54. Each aperture structure 54 is associated with a blocking bar 36. In this example, each aperture structure 54 comprises a circular relatively larger through hole 56 joined to a circular relatively smaller through hole 58. The central axes of the larger through holes 56 and the smaller through holes 58 are parallel with the longitudinal axis 24.

The blocking plate 52 further comprises blocking plate opening 60. When the blocking plate 52 adopts the blocking position, the blocking plate opening 60 is configured to receive the actuator pin 40 of the actuator 38 (i.e. when the actuator 38 adopts the blocking position). The blocking plate opening 60 is here exemplified as a through hole having a central axis parallel with the longitudinal axis 24. The blocking plate opening 60 may however alternatively be realized as a blind hole or similar structure to be engaged by the actuator pin 40.

In the blocking position of the blocking plate 52, the smaller through holes 58 of the aperture structure 54 are concentric with a respective blocking bar 36. In the unblocking position of the blocking plate 52, the larger through holes 56 of the aperture structure 54 are concentric with a respective blocking bar 36. The aperture structure 54 may be of various types of different designs and does not need to comprise through holes 56, 58 as illustrated in Fig. 5. According to one alternative example, each aperture structure 54 comprises a square hole instead of the larger through hole 56 and an angled hole (e.g. having a wedge-shaped appearance) instead of the smaller through hole 58.

Fig. 6 schematically represents a side view of one example of a blocking bar 36 according to the present disclosure. The blocking bar 36 of this example comprises a main portion 62, a distal end portion 64 and two blocking bar recesses 66. Each blocking bar recess 66 is constituted by a section of reduced diameter, such as a waist, and is here implemented as curved section. The curved section of each blocking bar recess 66 substantially corresponds to (e.g. is slightly larger than) the radius of curvature of the thread 46 of the fastening element 30.

The blocking bar 36 may for example be made of metal. The blocking bar 36 is arranged to move in a movement direction 68.

The diameter of the end portion 64 of the blocking bar 36 substantially corresponds to (e.g. is slightly smaller than) the diameter of the larger through hole 56 of the aperture structure 54 of the blocking plate 52. The diameter of the end portion 64 of the blocking bar 36 is larger than the diameter of the smaller through hole 58 of the aperture structure 54 of the blocking plate 52. The diameter of the blocking bar recesses 66 substantially corresponds to (e.g. is slightly smaller than) the diameter of the smaller through hole 58 of the aperture structure 54 of the blocking plate 52.

Each of the end portion 64 and the main portion 62 has a circumferential profile corresponding to the profile of the fastening element recess 48 of the fastening element 30. In this case, the end portion 64 and the main portion 62 of the blocking bar 36 are curved and have substantially the same radius as (e.g. slightly smaller than) the fastening element recess 48 of the fastening element 30.

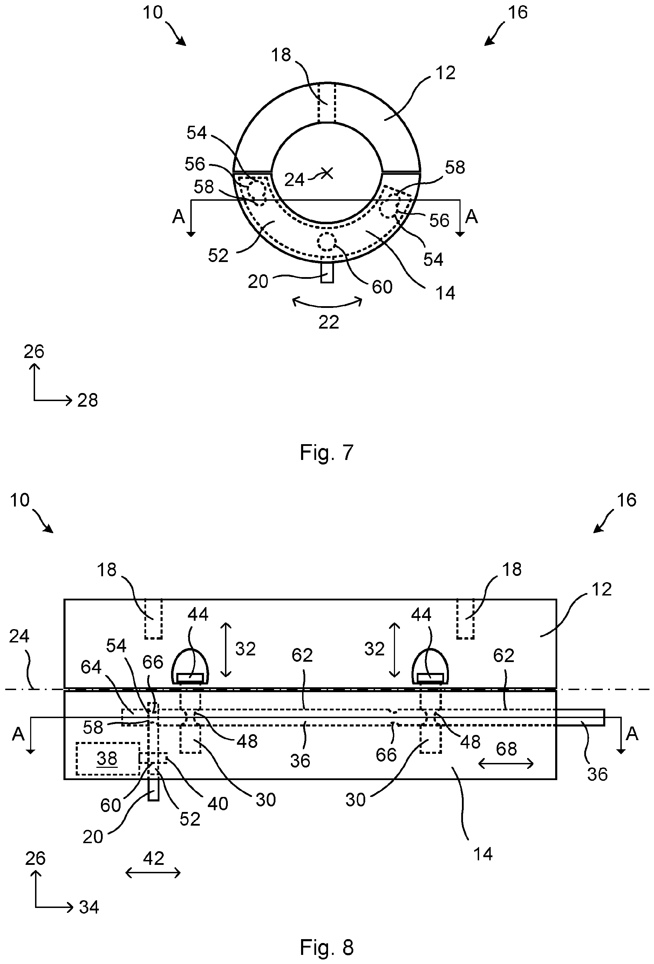

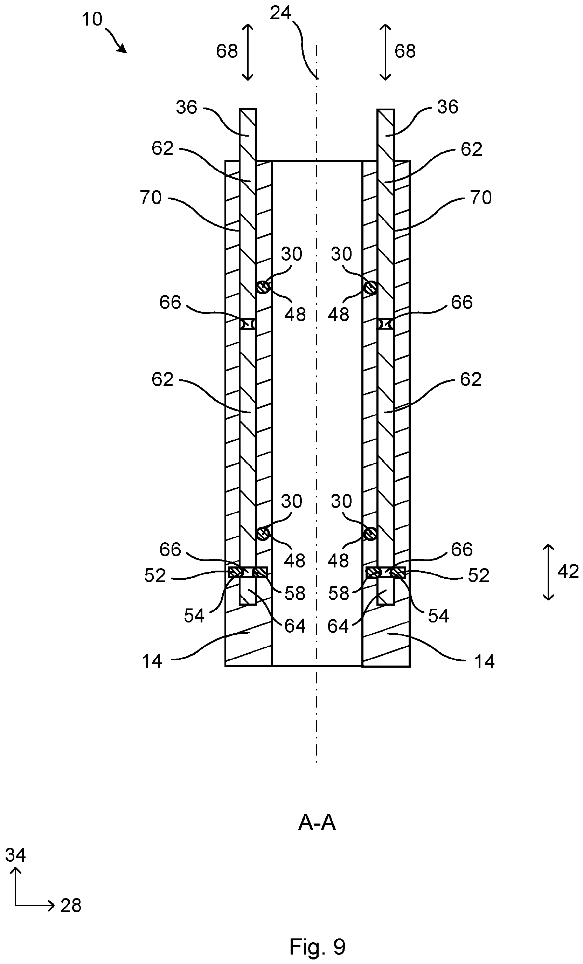

Fig. 7 schematically represents a front view of the protecting arrangement 10 and further illustrating some interior components. Fig. 8 schematically represents a side view of the protecting arrangement 10 and further illustrating some interior components. Fig. 9 schematically represents a cross-sectional view of section A-A in Figs. 7 and 8.

In Figs. 7, 8 and 9, the actuator 38 has adopted the blocking position such that the fastening elements 30 are prevented from being released. In the specific example of Figs. 7, 8 and 9, the protecting arrangement 10 comprises two types of intermediate components between the actuator 38 and the fastening elements 30, namely the blocking plate 52 and the blocking bars 36. However, alternative ways of preventing the fastening elements 30 from being released are conceivable, including a direct blocking of a fastening element 30 by the actuator 38.

With collective reference to Figs. 7, 8 and 9, each of the actuator 38, the blocking plate 52 and the blocking bars 36 have adopted their respective blocking positions. As illustrated in Figs. 8 and 9, each blocking bar 36 extends through and engages the fastening element recesses 48 of two fastening elements 30. As a consequence, the fastening elements 30 are prevented from being released, e.g. screwed upwardly along movement direction 32.

Fig. 9 shows that the blocking bars 36 are guided in two bores 70 of the second part 14. The bores 70 are substantially symmetric with respect to, and parallel to, the longitudinal axis 24.

As illustrated in Figs. 8 and 9, each smaller through hole 58 of the aperture structure 54 of the blocking plate 52 is aligned with one blocking bar recess 66 (the leftmost blocking bar recess 66 in Fig. 8) of an associated blocking bar 36. Since the end portion 64 of the blocking bar 36 is larger than the smaller through hole 58 of the aperture structure 54 of the blocking plate 52, the blocking bar 36 cannot be moved from the blocking position to an unblocking position. Thus, the blocking bars 36 are locked and prevented from being retracted from the cover 16 in the movement direction 68.

As illustrated in Fig. 8, the actuator pin 40 of the actuator 38 protrudes through the blocking plate opening 60 of the blocking plate 52. As a consequence, the blocking plate 52 is prevented from being rotated in the rotational direction 22.

Thus, when each of the actuator 38, the blocking plate 52 and the blocking bars 36 have adopted their respective blocking positions according to Figs. 7, 8 and 9, a device is securely protected against unauthorized tampering within the cover 16. If access to the device is requested by an operator, for example due to a service operation, the operator has to verify his identity. This can be done in various ways. The verification may be made locally in a control unit, with an access device such as a key and/or online. Once it has been verified that the operator is authorized to access the device, an authorization signal is sent to the actuator 38.

Based on the authorization signal, the actuator 38 moves from the blocking position to the unblocking position. In other words, the actuator pin 40 is retracted in the movement direction 42 out from the blocking plate opening 60 of the blocking plate 52. As a consequence, the blocking plate 52 is no longer blocked.

The operator may then rotate the blocking plate 52 in the rotational direction 22 from the blocking position to the unblocking position. This may be made manually be the operator by gripping and pulling the manoeuvring member 20. Alternatively, this movement of the blocking plate 52 may be automated, e.g. actuated by means of a blocking disc actuator.

When the blocking plate 52 adopts the unblocked position, each larger through hole 56 of the aperture structure 54 of the blocking plate 52 is aligned with the previously engaged blocking bar recess 66 of an associated blocking bar 36. Thus, each larger through hole 56 is concentric with an associated blocking bar 36. Since the larger through holes 56 each has a larger diameter than the end portions 64 of the blocking bars 36, the blocking bars 36 can be moved from the blocking position illustrated in Figs. 8 and 9, to an unblocking position.

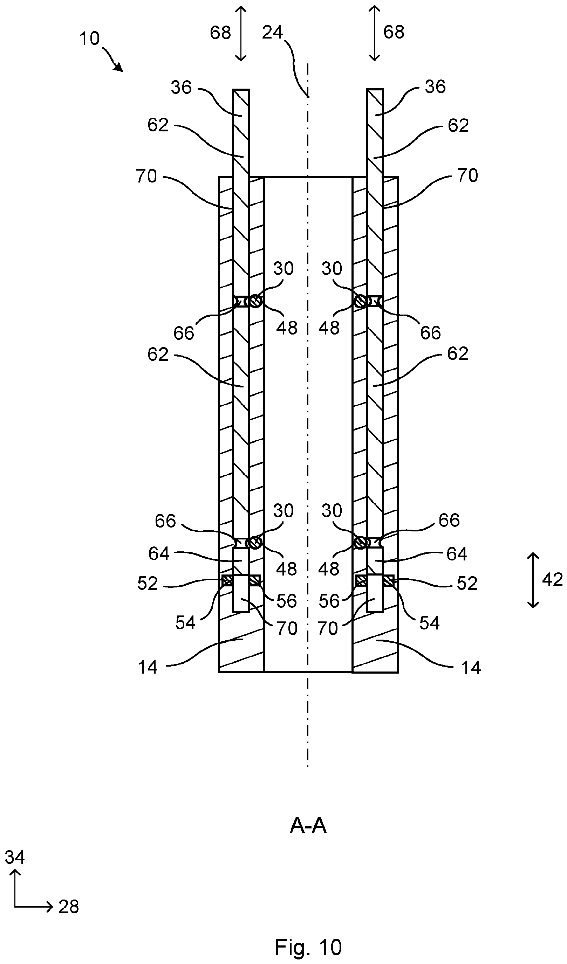

Fig. 10 schematically represents the cross-sectional view of Fig. 9, but where the blocking bars 36 and the blocking plate 52 have adopted their respective unblocking position. As can be seen in Fig. 10, each end portion 64 of the blocking bars 36 have passed through the associated larger through hole 56 of the aperture structures 54 of the blocking plate 52.

Fig. 10 further shows that the two blocking bar recesses 66 of each blocking bar 36 are aligned with an associated fastening element 30 when the blocking bars 36 have adopted their unblocking positions. The unblocking positions of the blocking bars 36 may for example be defined by a mechanical stop (not shown) in the bore 70. Since the radius of curvature of the blocking bar recesses 66 substantially corresponds to (e.g. is slightly larger than) the radius of curvature of the threads 46 of the fastening elements 30, the fastening elements 30 are no longer blocked and can be released, e.g. screwed upwards along movement direction 32.

Thus, when the actuator 38 adopts the unblocking position, the at least one fastening element 30 is allowed to be released. The cover 16 may then be opened and the device previously enclosed by the cover 16 can be accessed. For this purpose, the first part 12 may be rotated relative to second part 14 by means of a hinge (not shown) or the first part 12 may be completely removed from the second part 14.

As an alternative to the unblocking position of the blocking bars 36 in Fig. 10 where the blocking bar recesses 66 are aligned with the fastening elements 30, the unblocking position of the blocking bars 36 may be a position past the last fastening element 30 (the rightmost fastening element 30 in Fig. 8). The blocking bars 36 may also be retracted out from the cover 16, for example by hand or by a blocking bar actuator (not shown).

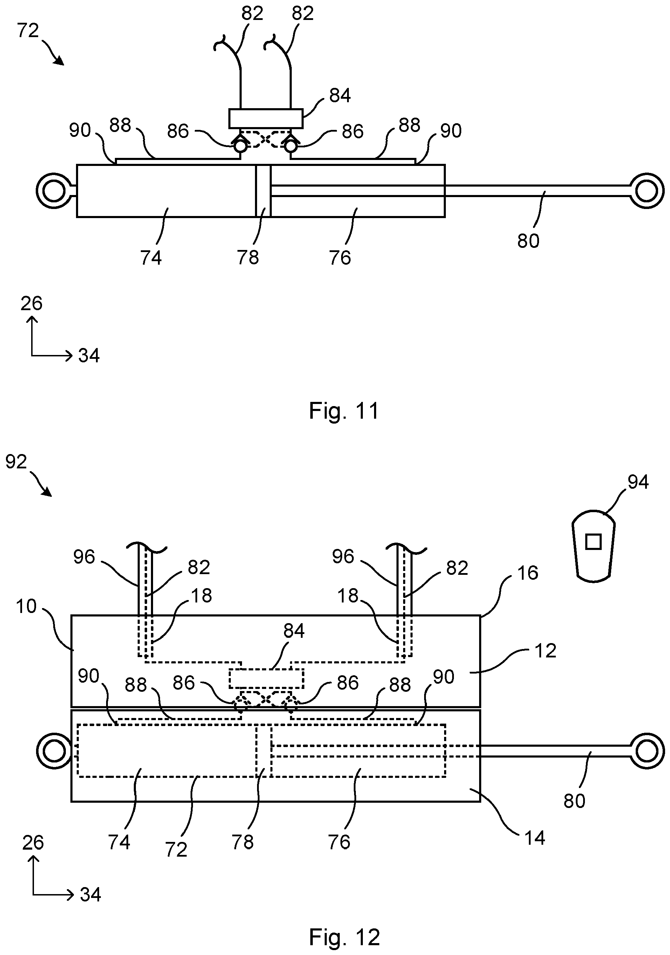

Fig. 11 schematically represents a side view of a device 72 to be protected from unauthorized tampering. The device 72 is here exemplified as a double-acting hydraulic cylinder comprising a push chamber 74, a pull chamber 76, a piston 78 and a piston rod 80. In this example, the fluid-actuated device 72 comprises fluid lines 82, a solenoid valve 84, check valves 86, fluid lines 88 and fluid connections 90.

Fig. 12 schematically represents a side view of a system 92 comprising the previously described protecting arrangement 10 (illustrated in simplified form) enclosing the device 72 and an access device 94, here exemplified as a key. Fig. 12 further shows how the fluid lines 82 of the device 72 are guided through the openings 18 of the first part 12 of the cover 16. Steel tubes 96 are attached to the outside of the cover 16 to protect the fluid lines 82. As can be seen in Fig. 12, the solenoid valve 84, the check valves 86, the fluid lines 88 and the fluid connections 90 are protected by the cover 16. Electrical cables and electrical connectors may be protected in the same manner within the cover 16 for electrical devices.

If an operator wants to access the device 72, e.g. for a service operation, the operator may contact a responsible administrator and ask for access delegation to the access device 94. Once, access has been delegated to the access device 94, the operator can command the access device 94 to send the authorization signal to the actuator 38 of the protecting arrangement 10 to initiate the above-described opening sequence of the protecting arrangement 10.

While the present disclosure has been described with reference to exemplary embodiments, it will be appreciated that the present invention is not limited to what has been described above. For example, it will be appreciated that the dimensions of the parts may be varied as needed. Accordingly, it is intended that the present invention may be limited only by the scope of the claims appended hereto.

## Claims

1. Protecting arrangement (10) for protecting a device (72) from unauthorized tampering, the protecting arrangement (10) comprising:
- a first part (12) and a second part (14) jointly configured to form a cover (16) for enclosing the device (72) to be protected from unauthorized tampering;
- at least one fastening element (30) for fastening the first part (12) to the second part (14); and
- an actuator (38) movable from a blocking position to an unblocking position based on an authorization signal;
wherein the at least one fastening element (30) is prevented from being released when the actuator (38) adopts the blocking position and wherein the at least one fastening element (30) is allowed to be released when the actuator (38) adopts the unblocking position.

2. The protecting arrangement (10) according to claim 1, further comprising a blocking bar (36) for blocking the at least one fastening element (30) in a blocking position of the blocking bar (36) and for unblocking the at least one fastening element (30) in an unblocking position of the blocking bar (36), wherein the blocking bar (36) is prevented from being moved from the blocking position when the actuator (38) adopts the blocking position.

3. The protecting arrangement (10) according to claim 1, further comprising a blocking bar (36) arranged in a bore (70) of the second part (14), wherein the blocking bar (36) is movable from a blocking position in the bore (70), in which the blocking bar (36) blocks the at least one fastening element (30) such that the at least one fastening element (30) is prevented from being released, to an unblocking position, in which the blocking bar (36) does not block the at least one fastening element (30) such that the at least one fastening element (30) is allowed to be released, when the actuator (38) adopts the unblocking position.

4. The protecting arrangement (10) according to claim 3, wherein the bore (70) is substantially parallel to a longitudinal axis (24) of the cover (16).

5. The protecting arrangement (10) according to any of claims 2 to 4,
wherein the blocking bar (36) is manually movable from the blocking position to the unblocking position when the actuator (38) adopts the unblocking position.

6. The protecting arrangement (10) according to any of claims 2 to 5,
wherein the at least one fastening element (30) comprises a fastening element recess (48) and wherein the blocking bar (36) blocks the at least one fastening element (30) by engaging the fastening element recess (48) in the blocking position of the blocking bar (36).

7. The protecting arrangement (10) according to any of claims 2 to 6, further comprising a blocking plate (52) having an aperture structure (54), wherein the blocking plate (52) is rotatable from a blocking position, in which the blocking plate (52) blocks the blocking bar (36) by engaging the blocking bar (36) with the aperture structure (54), to an unblocking position, in which the blocking bar (36) is allowed to move to the unblocking position of the blocking bar (36), when the actuator (38) adopts the unblocking position.

8. The protecting arrangement (10) according to claim 7, wherein the blocking bar (36) comprises at least one blocking bar recess (66), such as a waist, and wherein the blocking plate (52) blocks the blocking bar (36) by engaging the at least one blocking bar recess (66) with the aperture structure (54) in the blocking position of the blocking plate (52).

9. The protecting arrangement (10) according to claim 7 or 8, wherein the actuator (38) comprises an actuator pin (40) and wherein the blocking plate (52) comprises a blocking plate opening (60) for receiving the actuator pin (40) in the blocking position of the blocking plate (52).

10. The protecting arrangement (10) according to any of claims 7 to 9,
wherein the blocking plate (52) is manually rotatable from the blocking position to the unblocking position when the actuator (38) adopts the unblocking position.

11. The protecting arrangement (10) according to any of the preceding claims, wherein each of the first part (12) and the second part (14) is constituted by a cylinder half.

12. The protecting arrangement (10) according to any of the preceding claims, wherein the device (72) is constituted by a fluid-actuated device.

13. The protecting arrangement (10) according to claim 12, wherein at least one opening (18) is arranged in the first part (12) and/or the second part (14), wherein a fluid line (82) can be guided through each of the at least one opening (18) to the fluid-actuated device.

14. System (92) comprising a protecting arrangement (10) according to any of the preceding claims and an access device (94) configured to send the authorization signal to the actuator (38) upon verifying that an operator is authorized to access the device (72).

15. Method for preventing unauthorized access to a device (72), the method comprising:
- enclosing the device (72) with a cover (16) formed by a first part (12) and a second part (14);
- fastening the first part (12) to the second part (14) by means of at least one fastening element (30);
- providing an actuator (38) movable from a blocking position to an unblocking position based on an authorization signal, wherein the at least one fastening element (30) is prevented from being released when the actuator (38) adopts the blocking position and wherein the at least one fastening element (30) is allowed to be released when the actuator (38) adopts the unblocking position;
- determining whether an operator is authorized to access the device (72); and
- sending the authorization signal to the actuator (38) upon verifying that the operator is authorized to access the device (72).
